# EUROPÄISCHE PATENTANMELDUNG

(11) **EP 4 790 224 A1**
(43) Veröffentlichungstag der Anmeldung: **12.08.2026**
(21) Anmeldenummer: 26156289.6
(22) Anmeldetag: 04.02.2026
(51) Int. Cl.: E06B 3/66, E06B 3/673

(54) **HALTEVORRICHTUNG, TRANSPORTWAGEN UND VERFAHREN ZUM TRANSPORTIEREN EINES SPROSSENEINSATZES FÜR EINE ISOLIERGLASSCHEIBE**

(30) Priorität: 07.02.2025 DE 102025104619
(71) Anmelder: Glaston Germany GmbH, 75242 Neuhausen-Hamberg (DE)
(72) Erfinder: Schadrin, Gennadi, 75196 Remchingen (DE)
(74) Vertreter: Twelmeier Mommer & Partner

(57) **Zusammenfassung**

Beschrieben wird eine Haltevorrichtung (11), ein Transportwagen (10) und ein Verfahren zum Transportieren eines Sprosseneinsatzes (5; 5') im Zusammenhang mit der Herstellung einer Isolierglasscheibe (1). Ein wenigstens eine Sprosse (6; 6') aufweisender Sprosseneinsatz (5; 5') wird so positioniert, sodass die wenigstens eine Sprosse (6; 6') vertikal verläuft. Die Haltevorrichtung (11) weist eine Sprossenendenhalteeinrichtung (30) mit einer Beladerichtung (B) auf und wird mit dem Sprosseneinsatz (5; 5') beladen, indem ein freies Ende (8; 8') der wenigstens einen Sprosse (6; 6') mit der Haltevorrichtung (11) in Eingriff gebracht wird. Die Haltevorrichtung (11) wird mit dem Sprosseneinsatz (5; 5') zu einer automatischen Sprossenstation (41) transportiert. Der Sprosseneinsatz (5; 5') wird entladen, indem er der Haltevorrichtung (11) mit einer Greifvorrichtung (50) entgegen der Beladerichtung (B) entnommen und anschließend gedreht wird, bis die wenigstens eine Sprosse (6; 6') horizontal verläuft. Der Sprosseneinsatz (5; 5') wird von der automatischen Sprossenstation (41) in einen rahmenförmigen Abstandhalter (4) eingesetzt, wobei die wenigstens eine Sprosse (6; 6') horizontal verläuft.

## Beschreibung

Die Erfindung betrifft die Herstellung einer Isolierglasscheibe mit einem Sprosseneinsatz. Derartige Isolierglasscheiben werden schon seit langer Zeit hergestellt, indem ein Sprosseneinsatz in einen rahmenförmigen Abstandhalter eingesetzt wird, bevor eine zweite Glastafel auf den auf einer ersten Glastafel aufgebrachten Abstandhalter aufgesetzt wird.

Eine Isolierglasscheibe der eingangs genannten Art ist beispielsweise aus der DE 10 2004 043 581 A1 bekannt. Die Isolierglasscheibe hat einen rahmenförmigen Abstandhalter, der aus einem thermoplastischen Abstandhalterstrang besteht. Es wird eine als Sprossenendstück ausgebildete Sprossenhalterung offenbart, welche Mittel zum Verankern am Abstandhalter (spitz zulaufende Dorne) aufweist. Aus der DE 10 2019 123 700 A1 ist ferner eine Isolierglasscheibe bekannt, bei welcher der rahmenförmige Abstandhalter durch Aufeinandersetzen von zwei pastösen und sich hernach verfestigenden Abstandhaltersträngen gebildet ist, deren Höhe zusammen die Höhe des Abstandhalters ergibt. Auf jede der beiden Glastafeln wird ein Abstandhalterstrang aufgetragen. Vor dem Zusammenfügen der beiden Glastafeln wird in den Abstandhalterstrang einer der Glastafeln ein Sprossenrahmen eingesetzt und am Abstandhalterstrang befestigt. Anschließend wird die zweite Glastafel aufgesetzt, sodass sich der Abstandhalter sowie der Sprosseneinsatz zwischen den beiden Glastafeln befinden. Die Herstellung erfolgt in einer Fertigungslinie mit mehreren Stationen, an welchen verschiedene Schritte während des Zusammenbauens der Isolierglasscheibe durchgeführt werden. Bei einer der Stationen handelt es sich um eine Sprossenstation, in welcher der Sprosseneinsatz manuell durch einen Arbeiter eingesetzt wird. Dabei ist es aus der Praxis bekannt, vorgefertigte Sprosseneinsätze auf Transportwagen mit Kragarmen zu hängen und derart befüllte Transportwagen zur Sprossenstation zu schieben. Der Arbeiter entnimmt die Sprosseneinsätze dann dem Transportwagen, um sie in den Abstandhalter der in der Sprossenstation stehenden Glastafel einzusetzen.

Wie bereits in der DE 10 2004 043 581 A1 beschrieben, ist das Handhaben von Sprosseneinsätzen nicht ganz einfach, insbesondere wenn sie für eine größere Isolierglasscheibe bestimmt sind. Der Sprosseneinsatz verhält sich vor seinem Einsetzen nicht wie ein starres Gebilde und deshalb ist es schwierig, eine solche Anordnung auf Anhieb exakt an der vorbestimmten Stelle zu positionieren. Dabei kommt es vor, dass der Sprosseneinsatz bei dem Versuch, ihn in dem vom Abstandhalter umgebenden Raum zu positionieren, den noch weichen thermoplastischen Abstandhalter verformt und/oder verletzt. Es wurde deshalb stets versucht, einen noch nicht ausgehärteten Abstandhalterstrang aus einem pastösen Material nach dem Applizieren auf die erste Glastafel nicht zu verformen und/oder mit Kräften zu belasten, um das Erscheinungsbild des Abstandhalters in der fertigen Isolierglasscheibe nicht zu beeinträchtigen.

Der Erfindung liegt die Aufgabe zugrunde, die Handhabung und den Transport von Sprosseneinsätzen im Zusammenhang mit der Herstellung von Isolierglasscheiben, insbesondere bei automatisiertem Einsetzen der Sprosseneinsätze, zu verbessern.

Diese Aufgabe wird gelöst durch eine Haltevorrichtung mit den in Anspruch 1 angegebenen Merkmalen, einen Transportwagen mit den in Anspruch 7 angegebenen Merkmalen und ein Verfahren mit den in Anspruch 12 angegebenen Merkmalen. Vorteilhafte Weiterbildungen der Erfindung sind Gegenstand von Unteransprüchen.

Eine erfindungsgemäße Haltevorrichtung zum Halten eines Sprosseneinsatzes für eine Isolierglasscheibe während eines Transportvorgangs weist eine Sprossenendenhalteeinrichtung mit einer Beladerichtung auf. Die Beladerichtung erstreckt sich entlang einer Sprosse eines in die Haltevorrichtung geladenen Sprosseneinsatzes. Der Sprosseneinsatz weist wenigstens eine Sprosse auf. Der Sprosseneinsatz kann aus einer einzigen Sprosse bestehen. Der Sprosseneinsatz kann aber auch eine Anordnung aus mehreren sich kreuzenden Sprossen enthalten. Eine solche Anordnung wird teilweise auch als "Sprossenrahmen" bezeichnet. Eine Sprosse kann durch ein längliches und/oder lang gestrecktes Sprossenprofil gebildet werden. Eine Sprosse kann zwei zum Ansetzen an den Abstandhalter eingerichtete Enden aufweisen. Das Sprossenprofil kann als Hohlprofil ausgebildet sein. Eine Sprosse kann auch aus mehreren Sprossenprofilen zusammengesetzt sein. Bei den Sprossenprofilen kann es sich um dünnwandige Hohlprofilstäbe behandeln. Der Sprosseneinsatz enthält wenigstens ein längliches Sprossenprofil mit einem dem Abstandhalter zugewandten Sprossenende. Die Haltevorrichtung kann mit dem Sprosseneinsatz beladen werden, indem der Sprosseneinsatz im Bereich eines freien Endes einer Sprosse mit der Sprossenendenhalteeinrichtung in Eingriff gebracht wird. Das freie Ende der Sprosse kann entlang der Sprossenlängsrichtung, insbesondere parallel zu der Sprossenlängsrichtung, mit der Haltevorrichtung in Eingriff gebracht werden.

Bei einem erfindungsgemäßen Verfahren zum Transportieren eines Sprosseneinsatzes im Zusammenhang mit der Herstellung einer Isolierglasscheibe wird der Sprosseneinsatz so positioniert, dass die wenigstens eine Sprosse vertikal verläuft. Der Sprosseneinsatz kann eine lange Seite und eine kurze Seite aufweisen, insbesondere wenn er für eine nicht quadratische Isolierglasscheibe bestimmt ist. Ein solcher Sprosseneinsatz kann vor dem Beladen der Haltevorrichtung hochkant positioniert werden, sodass die lange Seite des Sprosseneinsatzes vertikal verläuft.

Die Haltevorrichtung wird mit dem Sprosseneinsatz beladen, indem ein freies Ende der wenigstens einen Sprosse entlang einer Beladerichtung mit der Haltevorrichtung in Eingriff gebracht wird, bis der Sprosseneinsatz an einem der Haltevorrichtung zugeordneten Positionieranschlag anliegt. Der Sprosseneinsatz kann mit einem freien Ende der wenigstens einen Sprosse derart in die Haltevorrichtung eingesetzt werden, dass eine lange Seite des von der Haltevorrichtung gehaltenen Sprosseneinsatzes vertikal verläuft. Die Haltevorrichtung wird mit dem, insbesondere hochkant positionierten, Sprosseneinsatz zu einer automatischen Sprossenstation transportiert. Der Sprosseneinsatz wird entladen, indem er der Haltevorrichtung mit einer Greifvorrichtung entgegen der Beladerichtung entnommen wird. Die Beladerichtung kann mit der Lotrechten übereinstimmen.

Anschließend wird der Sprosseneinsatz mittels der Greifvorrichtung gedreht, bis die wenigstens eine Sprosse, insbesondere die lange Seite des Sprosseneinsatzes, horizontal verläuft. Beim Zusammenbauen der Isolierglasscheibe werden die Glastafeln nämlich üblicherweise so durch die Fertigungslinie transportiert, dass deren lange Seite horizontal verläuft. Der Sprosseneinsatz wird, insbesondere mit horizontal verlaufender langer Seite, von der automatischen Sprossenstation in den rahmenförmigen Abstandhalter eingesetzt. Die Isolierglasscheibe kann wenigstens zwei Glastafeln und einen rahmenförmigen Abstandhalter aus einem kunststoffbasierten Material enthalten. Der Abstandhalter kann in an sich bekannter Weise auf eine erste Glastafel aufgebracht worden sein, indem ein pastöser und sich hernach verfestigender Abstandhalterstrang rahmenförmig auf die erste Glastafel appliziert wurde. Der Abstandhalterstrang kann ein pastöser und sich sodann verfestigender Abstandhalterstrang aus einem thermoplastischen Material und/oder einem reaktiv vernetzenden Material sein. Die erste Glastafel mit dem Abstandhalter wird der Sprossenstation vor dem Einsetzen des Sprosseneinsatzes in an sich bekannter Weise, beispielsweise über einen Horizontalförderer, zugeführt. Die Sprossenstation kann eine automatische Sprosseneinsatz-Montagestation sein. Die Sprossenstation kann mehrere Bearbeitungsköpfe enthalten. Jeder der Bearbeitungsköpfe ist eingerichtet, ein Sprossenende aufzunehmen und in den Abstandhalterstrang einzubetten. Nach dem Einsetzen des Sprosseneinsatzes kann die Glastafel in eine Pressstation gefördert und in an sich bekannter Weise mit einer weiteren Glastafel verbunden werden, sodass der Abstandhalter und der Sprosseneinsatz zwischen den beiden Glastafeln zu liegen kommt. In der fertigen Isolierglasscheibe sind der Abstandhalter und der Sprosseneinsatz zwischen den beiden Glastafeln angeordnet.

Ein erfindungsgemäßer Transportwagen zum Transportieren mehrerer Sprosseneinsätze für Isolierglasscheiben weist eine Beladerichtung auf, welche insbesondere entlang der Lotrechten verlaufen kann. Der Transportwagen kann manuell von einem Arbeiter oder einer Bedienperson verschiebbar sein. Der Transportwagen weist mehrere quer zur Beladerichtung nebeneinander angeordnete Haltevorrichtungen für jeweils einen, insbesondere hochkant positionierten, Sprosseneinsatz auf. Jeder der Haltevorrichtungen ist ein Positionieranschlag zugeordnet, welcher die Position des Sprosseneinsatzes definiert, nachdem ein freies Ende der wenigstens eine Sprosse bei einem Beladevorgang entlang der Beladerichtung mit dieser Haltevorrichtung in Eingriff gebracht wurde. Jede der Haltevorrichtungen kann mit einem wenigstens eine Sprosse aufweisenden Sprosseneinsatz beladen werden, indem ein freies Ende der wenigstens einen Sprosse entlang einer Beladerichtung mit dieser Haltevorrichtung in Eingriff gebracht wird, bis der Sprosseneinsatz an dem dieser Haltevorrichtung zugeordneten Positionieranschlag anliegt. Der Positionieranschlag kann bei einem Beladen der Haltevorrichtung eine Verschiebung des mit der Haltevorrichtung in Eingriff gebrachten Sprosseneinsatzes in Beladerichtung begrenzen.

Die Erfindung hat wesentliche Vorteile:
- Das Verfahren kann insbesondere beim automatischen Einsetzen eines Sprosseneinsatzes in einen rahmenförmigen Abstandhalter während der Herstellung und/oder eines Zusammenbauvorgangs einer Isolierglasscheibe eingesetzt werden.
- In jeder Haltevorrichtung wird nur ein einziger Sprosseneinsatz gehalten. Dadurch wird eine Sortierung, ein geordneter Transport sowie eine einfache Entnahme von Sprosseneinsätzen ermöglicht. Ferner kann vermieden werden, dass Sprosseneinsätze beim Transport von dem Transportwagen herunterfallen und/oder beschädigt werden.
- Schon beim Beladen der Haltevorrichtungen und/oder des Transportwagens können die Sprosseneinsätze in einer Reihenfolge einsortiert werden, welche mit der Reihenfolge übereinstimmt, in welcher die zugehörigen Isolierglasscheiben auf der Fertigungslinie zusammengebaut werden. Hierdurch entfällt eine Sortierung an der Sprossenstation, sodass dort eine automatische Zuführung sehr einfach realisiert werden kann.

- Das an dem Positionieranschlag anliegende Sprossenende kann gewährleisten, dass sich der Sprosseneinsatz in der Haltevorrichtung in einer definierten Position befindet. Dies kann eine automatische Entnahme des Sprosseneinsatz, beispielsweise durch einen Roboterarm, erleichtern.
- Die Haltevorrichtung ist besonders gut zum Halten unterschiedlich ausgestalteter und unterschiedlich großer Sprosseneinsätze geeignet. Es können sowohl kleine Sprosseneinsätze als auch großer Sprosseneinsätze in derselben Haltevorrichtung sicher gehalten und positioniert werden. Außerdem können in derselben Haltevorrichtung auch Sprosseneinsätzen gehalten und positioniert werden, welche lediglich aus einer einzigen Sprosse bestehen.
- Die Haltevorrichtung und der Transportwagen ermöglichen eine Aufnahme von hochkant positionierten Sprosseneinsätzen (einschließlich vertikal positionierter Einzelsprossen), sodass ein platzsparender und sicherer Transport von Sprosseneinsätzen ermöglicht wird.

In weiterer Ausgestaltung der Erfindung kann vorgesehen sein, dass beim Beladen der Haltevorrichtung ein unteres freies Ende der wenigstens einen Sprosse von oben in die Haltevorrichtung eingesteckt wird. Zum Entladen kann die Greifvorrichtung die mit ihrem unteren freien Ende in der Haltevorrichtung gehaltene Sprosse in deren mittleren Abschnitt greifen und den Sprosseneinsatz nach oben aus der Haltevorrichtung herausziehen. Die Greifvorrichtung kann den Sprosseneinsatz drehen, bis die darin gehaltene Sprosse horizontal verläuft. Hierzu kann die Greifvorrichtung drehbar an einem beweglichen Roboterarm angebracht sein. Die Greifvorrichtung kann einen Anschluss für einen Roboterarm enthalten. Die Greifvorrichtung kann mit einem Drehantrieb koppelbar sein und/oder einen Drehantrieb enthalten. Die Greifvorrichtung entnimmt also den Sprosseneinsatz aus der Haltevorrichtung und dreht ihn anschließend in die zum Einsetzen in der Sprossenstation benötigte Orientierung. Insbesondere kann die Greifvorrichtung den Sprosseneinsatz beim Entladen ausschließlich im mittleren Abschnitt der in der Haltevorrichtung gehaltenen Sprosse greifen. Dies kann eine bauraumsparende und einfache Ausgestaltung der Greifvorrichtung ermöglichen.

Die Greifvorrichtung kann die in der Haltevorrichtung gehaltene Sprosse mit zwei voneinander beabstandeten Greiferpaaren greifen. Jedes Greiferpaar kann zwei Greifelemente enthalten. Die Greifelemente können beim Greifen der Sprosse aneinander angenähert werden. Hierzu kann jedes der Greifelemente mit einem Greifantrieb gekoppelt sein. Die Greifvorrichtung kann den Greifantrieb enthalten, beispielsweise einen Pneumatikzylinder. Ein erstes Greifelement des ersten Greiferpaares kann mit einem ersten Greifelement des zweiten Greiferpaares über einen ersten Verbindungssteg gekoppelt sein. Ein zweites Greifelement des ersten Greiferpaares kann mit einem zweiten Greifelement des zweiten Greiferpaares über einen zweiten Verbindungssteg gekoppelt sein. Dies kann eine synchrone Greifbewegung der Greifelemente in beiden Greiferpaaren vereinfachen. Die beiden Greiferpaare können in Längsrichtung einer zu greifenden Sprosse beabstandet sein. Dieser Abstand kann etwas größer als eine größtmögliche Höhe von Quersprossen gewählt werden, und kann insbesondere 8 mm bis 45 mm betragen. Dieser Abstand kann gewährleisten, dass auch Sprossen in der Mitte gegriffen werden können, welche dort mit einer Quersprosse verbunden sind. In Ausgestaltung kann dieser Abstand veränderbar sein. Letzteres kann ein zusätzliches Greifen der Quersprosse ermöglichen. Die Greifvorrichtung kann eine Abstützung für eine Quersprosse aufweisen. Die Entnahme und die Übergabe von labilen Sprosseneinsätzen bzw. Sprossenrahmen mithilfe der Greifvorrichtung kann dadurch verbessert werden.

In weiterer Ausgestaltung der Erfindung kann die Haltevorrichtung ein Gehäuse mit einer Basisseite, einer Beladeseite und zwei Seitenwänden aufweisen. Die Beladeseite liegt der Basisseite gegenüber. Die Seitenwände erstrecken sich von der Basisseite bis zu der Beladeseite. Die Beladerichtung weist von der Beladeseite zur Basisseite. Das Gehäuse weist im Bereich der Basisseite eine Aussparung und/oder eine Öffnung für ein mit der Haltevorrichtung in Eingriff gebrachtes Sprossenende auf. Im Bereich der Aussparung und/oder Öffnung kann ein Positionieranschlag für ein Sprossenende angeordnet sein. Die Öffnung in der Basisseite kann sich bis in die Seitenwände hinein erstrecken. Der Positionieranschlag kann in der Haltevorrichtung enthalten sein. Alternativ kann der Haltevorrichtung ein externer Positionieranschlag zugeordnet sein. Die Sprossenendenhalteeinrichtung kann wenigstens eine Klemmeinrichtung enthalten. Die Klemmeinrichtung ist eingerichtet, einen mit der Haltevorrichtung in Eingriff gebrachten Sprosseneinsatz im Bereich eines freien Sprossenende zu klemmen. Ein freies Ende der wenigstens einen Sprosse des Sprosseneinsatzes kann entlang der Beladerichtung mit der Klemmeinrichtung in Eingriff gebracht werden. Nach einem Beladen der Haltevorrichtung kann die Sprossenendenklemmeinrichtung ein freies Ende einer Sprosse klemmen. Die Sprossenendenhalteeinrichtung kann eine erste Klemmeinrichtung und in Beladerichtung dahinter eine zweite Klemmeinrichtung aufweisen. Die Haltevorrichtung kann auch an einem Förderband oder einer Förderkette montiert werden, um Sprosseneinsätze zu der Sprossenstation hinzutransportieren.

In Ausgestaltung kann die Klemmeinrichtung wenigstens zwei sich gegenüberliegende Sprossenklemmer enthalten. Insbesondere kann die Klemmeinrichtung wenigstens ein Paar aus zwei sich gegenüberliegenden Sprossenklemmern aufweisen. Ein zweites Sprossenklemmerpaar kann in Beladerichtung hinter einem ersten Sprossenklemmerpaar angeordnet sein. Jeder Sprossenklemmer kann ein Führungs- und/oder Haltemittel für eine Sprosse eines Sprosseneinsatzes bilden. Ein Sprossenklemmer kann eine Rolle und/oder eine Gleitführung aufweisen. Die Sprossenklemmer können eine Sprosse von gegenüberliegenden Seiten klemmen und halten. Wenigstens einer der Sprossenklemmer kann quer zur Beladerichtung und/oder quer zur Längsrichtung der zu klemmenden Sprosse bewegbar sein. Eine mit der Sprossenendenhalteeinrichtung in Eingriff gebrachte Sprosse kann somit quer zur Beladerichtung geklemmt werden. Dies kann ein sicheres Halten des Sprosseneinsatzes beim Transport gewährleisten. Unbeabsichtigtes Herausfallen aus der Haltevorrichtung kann vermieden werden. Der bewegbare Sprossenklemmer kann in Richtung des anderen Sprossenklemmers federbelastet sein. Die Klemmeinrichtung kann einen sich in Beladerichtung verjüngenden Einführbereich aufweisen. Im Einführbereich der Klemmeinrichtung kann sich der Abstand der beiden Sprossenklemmer - in Beladerichtung gesehen - verringern. Wenigstens einer der beiden Sprossenklemmer kann im Einführbereich einen gekrümmten oder schrägen Abschnitt aufweisen. Hierdurch kann gewährleistet werden, dass ein Sprossenende beim Einführen in die Sprossenendenhalteeinrichtung einen federbelasteten Sprossenklemmer beiseite drückt und so ohne weiteres von den beiden sich gegenüberliegenden Sprossenklemmern geklemmt wird. Dies ermöglicht eine einfache Ausgestaltung der Haltevorrichtung, da kein Antrieb zum Öffnen und Schließen der Klemmeinrichtung erforderlich ist.

In weiterer Ausgestaltung der Erfindung kann der Transportwagen eine Kupplung zum Ankoppeln des Transportwagens an eine automatische Sprossenstation aufweisen. Dies ermöglicht, dass der von einem Arbeiter zur Sprossenstation geschobene Transportwagen dort in definierter Position abgestellt wird, sodass die Sprosseneinsätze automatisch entnommen werden können. Der Transportwagen kann wenigstens eine Zusatzabstützung für große Sprosseneinsätze aufweisen. Die Zusatzabstützung kann eine ausziehbare Abstützplatte enthalten. Die Abstützplatte kann einen in der Haltevorrichtung gehaltene Sprosseneinsatz von unten abstützen. Die Zusatzabstützung kann eine Seitenführung enthalten. Die Seitenführung kann oberhalb der Haltevorrichtungen angeordnet sein. Jeder der Haltevorrichtungen kann eine Seitenführung zugeordnet sein. Die Seitenführung kann einen in der Haltevorrichtung gehaltenen Sprosseneinsatz quer zu einer Ebene abstützen, in welcher sich dieser Sprosseneinsatz erstreckt. Der Transportwagen kann 20 bis 80, insbesondere 45 bis 55, Haltevorrichtungen aufweisen. Jede der Haltevorrichtungen kann eine Sprossenendenhalteeinrichtung mit einer Beladerichtung für hochkant positionierte Sprosseneinsätze aufweisen. Die Beladerichtung kann vertikal nach unten orientiert sein, sodass ein unteres freies Ende einer vertikal verlaufenden Sprosse mit einer jeden der Haltevorrichtungen des Transportwagens in Eingriff gebracht werden kann. Alle Haltevorrichtungen des Transportwagens können gleich ausgestaltet sein. Der Positionieranschlag kann sich quer zur Beladerichtung erstrecken, insbesondere entlang aller Haltevorrichtungen des Transportwagens. Der Positionieranschlag kann durch eine Positionierfläche an einer Bodenplatte des Transportwagens gebildet werden. Der Positionieranschlag kann derart zum Positionieren eines Sprosseneinsatzes eingerichtet sein, dass er eine in Einsteckrichtung verlaufende Einsteckbewegung einer Sprosse in die Haltevorrichtung begrenzt. Der Transportwagen kann einem Reinigungskanal für den Positionieranschlag aufweisen. Der Reinigungskanal kann durch die Ausnehmungen und/oder Öffnungen in dem Gehäuse der nebeneinander angeordneten Haltevorrichtungen gebildet werden. Der Reinigungskanal kann quer zur Beladerichtung verlaufen.

Weitere Einzelheiten und Vorteile der Erfindung werden an Ausführungsbeispielen der Erfindung unter Bezugnahme auf die beigefügten Zeichnungen erläutert. Gleiche und einander entsprechende Komponenten sind darin mit übereinstimmenden Bezugszeichen versehen. Es zeigen:
- Figur 1: eine perspektivische Ansicht einer Isolierglasscheibe mit Sprosseneinsatz,
- Figur 2: eine perspektivische Ansicht eines erfindungsgemäßen Transportwagens mit mehreren erfindungsgemäßen Haltevorrichtungen,
- Figur 3: eine Draufsicht auf eine erfindungsgemäße Haltevorrichtung mit eingestecktem Sprosseneinsatz,
- Figur 4: eine entlang der Schnittfläche A-A der Figur 3 geschnittene Ansicht der Haltevorrichtung der Figur 3,
- Figur 5: eine perspektivische Ansicht eines schematisch dargestellten Roboterarms beim Entnehmen eines Sprosseneinsatzes aus dem Transportwagen,
- Figur 6: eine Ansicht ähnlich Figur 5 im weiteren Verlauf der Entnahme,
- Figur 7: eine perspektivische Ansicht des Transportwagens und des Roboterarms vor einer automatischen Sprossenstation,
- Figur 8: eine Greifvorrichtung zum erfindungsgemäßen Greifen eines Sprosseneinsatzes,
- Figur 9: die Greifvorrichtung der Figur 8 beim Greifen einer vertikal verlaufenden Sprosse,
- Figur 10: die Greifvorrichtung der Figur 8 beim Greifen einer vertikal verlaufenden Sprosse, welche mittig mit einer Quersprosse verbunden ist.

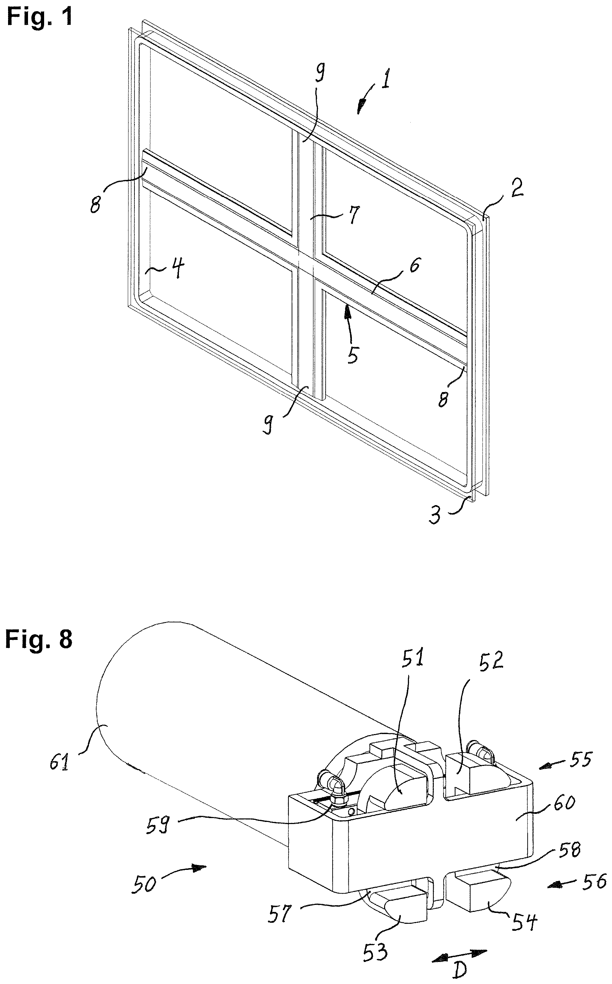

In Figur 1 ist eine rechteckige Isolierglasscheibe 1 dargestellt, welche eine erste Glastafel 2, eine zweite Glastafel 3, einen rahmenförmigen Abstandhalter 4 und einen Sprosseneinsatz 5 enthält. Der Sprosseneinsatz 5 ist als Sprossenkreuz ausgestaltet und enthält eine horizontal verlaufende Sprosse 6 sowie eine Quersprosse 7. Die Sprosse 6 hat zwei Sprossenenden 8, welche am Abstandhalter 4 befestigt sind. Die Quersprosse 7 hat ebenfalls zwei am Abstandhalter 4 befestigte Sprossenenden 9. Bei den Sprossen 6, 7 handelt es sich um dünnwandige Hohlprofile. Die lange Seite der Isolierglasscheibe 1 und des Sprosseneinsatzes 5 verlaufen horizontal. Der Abstandhalter 4 wird durch einen pastösen und sich hernach verfestigenden Strang aus einem kunststoffbasierten Material gebildet, welcher in an sich bekannter Weise auf die Glastafel 2 aufgetragen wird.

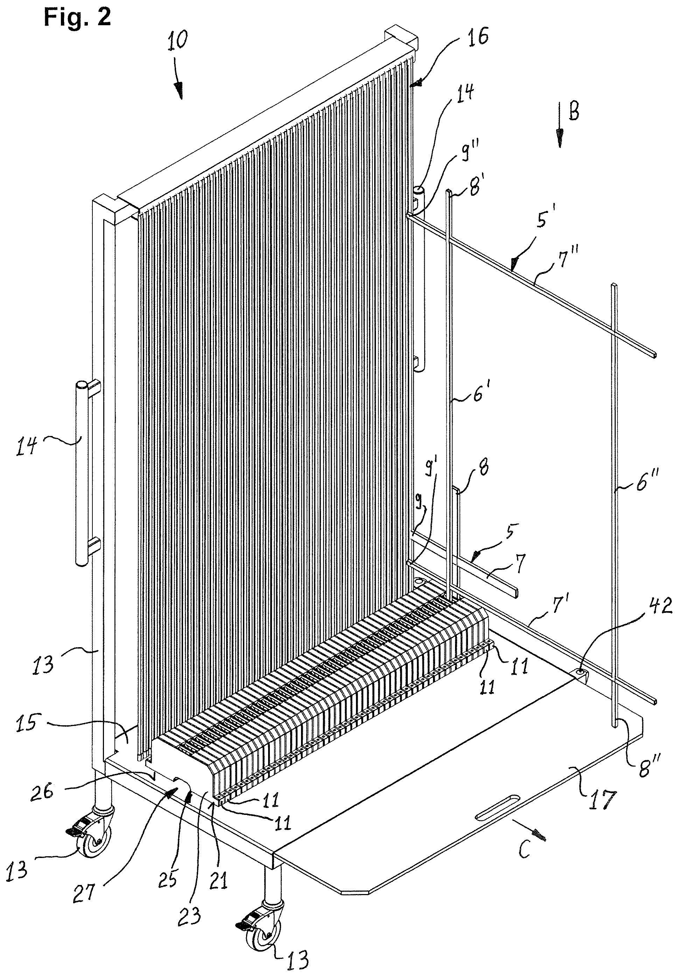

In Figur 2 ist ein erfindungsgemäßer Transportwagen 10 dargestellt, welcher eine Vielzahl benachbarter Haltevorrichtungen 11 gemäß der Erfindung aufweist. Der Transportwagen 10 hat ein Gestell 12 aus Stahlprofilen und ist auf vier Rollen 13 verfahrbar. Die Rollen können je nach Bedarf als Lenkrollen oder als Bockrollen ausgebildet sein. An dem Gestell 12 sind zwei Handgriffe 14 angebracht sind, über welche der Transportwagen 10 von einem Arbeiter verschoben werden kann. Die Haltevorrichtungen 11 sitzen auf einer Bodenplatte 15 des Transportwagen 10 und können von oben nach unten entlang einer Beladerichtung B mit verschiedenen Sprosseneinsätzen beladen werden. In Figur 2 ist die erste Haltevorrichtung 11 mit einem Sprossenkreuz 5 beladen, welches eine vertikal verlaufende Sprosse 6 und eine Quersprosse 7 aufweist. Die zweite Haltevorrichtung 11 ist mit einem großen hochkant positionierten Sprossenrahmen 5' beladen, welcher aus zwei vertikal verlaufenden Sprossen 6' und 6" sowie zwei Quersprossen 7' und 7" besteht. Beim Beladen werden die Sprosseneinsätzen 5 und 5' entlang der Beladerichtung B in die Haltevorrichtungen 11 eingesetzt. Dabei wird das untere freie Ende 8 der Sprosse 6 und das untere freie Ende 8' der Sprosse 6' in die jeweilige Haltevorrichtung 11 eingeschoben und dadurch mit der jeweiligen Haltevorrichtung 11 in Eingriff gebracht.

Der Transportwagen 10 hat Zusatzabstützungen 16, insbesondere für große Sprosseneinsätze, um freie Enden 9, 9', 9" von Quersprossen 7, 7', 7" zu führen und abzustützen. Die Zusatzabstützungen 16 erstrecken sich entlang der Lotrechten und sind beabstandet zueinander an dem Gestell 12 angebracht. Die Zusatzabstützungen 16 können durch Stege oder Bänder, insbesondere elastische Bänder, gebildet werden. Unterhalb der Bodenplatte 15 ist eine weitere Zusatzabstützung 17, insbesondere für große Sprosseneinsätze 5', in Form einer Abstützplatte angeordnet. Die Zusatzabstützung 17 ist entlang des Pfeiles C ausziehbar. Nach dem Ausziehen kann die Zusatzabstützung 17 große Sprossenrahmen 5' jeweils an einem unterem freien Enden 8" von vertikal verlaufenden Sprossen 6" abstützen, welche nicht mit einer Haltevorrichtung 11 in Eingriff stehen, vgl. Figur 2.

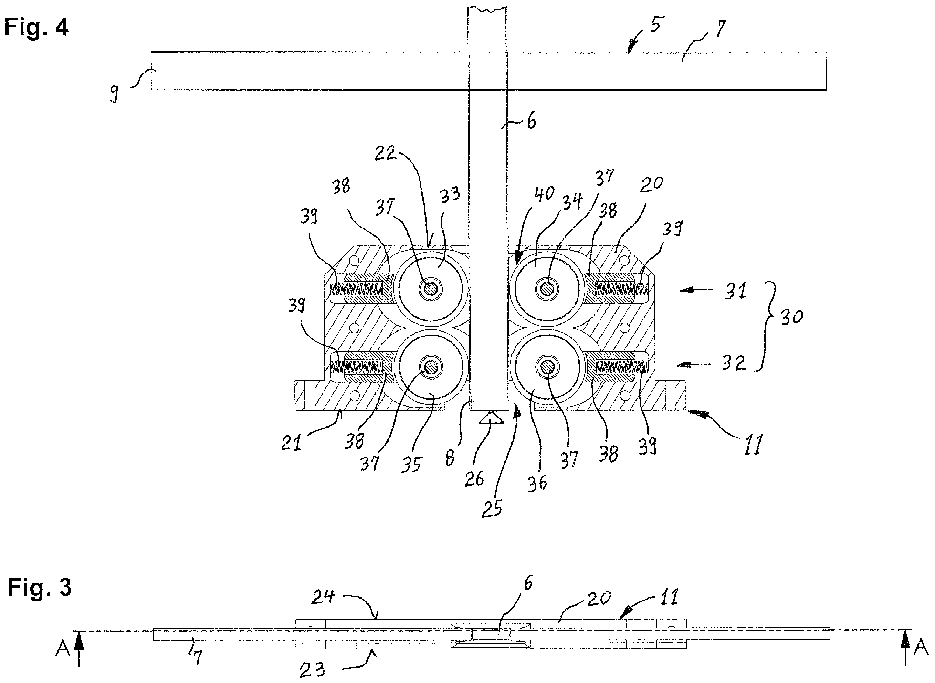

Jede der Haltevorrichtungen 11 weist ein Gehäuse 20 mit einer Basisseite 21, einer Beladeseite 22 und zwei Seitenwänden 23 und 24 auf, vgl. Figuren 3 und 4. Das Gehäuse 20 ist mit seiner Basisseite 21 auf der Bodenplatte 15 montiert. Das Gehäuse 20 hat eine Aussparung 25. Im Bereich der Aussparung 25 ist ein Positionieranschlag 26 angeordnet. Der Positionieranschlag 26 ist in Figur 4 schematisch angedeutet und wird im Transportwagen 10 durch die Oberseite der Bodenplatte 15 gebildet, vgl. Figur 2. Im Transportwagen 10 bilden die Aussparungen 25 der nebeneinander angeordneten Haltevorrichtungen 11 einen Reinigungskanal 27, um den Positionieranschlag 26 zu reinigen. Sollte Schmutz von oben in die Haltevorrichtungen 11 hineinfallen, so kann sich dieser auf dem Positionieranschlag 26 sammeln und eine präzise Positionierung der Sprosseneinsätze 5, 5' beeinträchtigen. Gleiches gilt, falls sich noch Späne an oder in den Sprossenenden 8, 8' befinden, welche in die Haltevorrichtungen 11 eingesteckt werden. Durch den Reinigungskanal 27 ist der Positionieranschlag 26 leicht zugänglich und kann in einfacher Weise gereinigt werden, beispielsweise indem Druckluft hindurchgeblasen wird.

Die Haltevorrichtung 11 weist eine Sprossenendenhalteeinrichtung 30 auf, welche aus zwei Klemmeinrichtungen 31 und 32 besteht. Die zweite Klemmeinrichtung 32 ist in Beladerichtung B hinter der ersten Klemmeinrichtung 31 angeordnet. Die Klemmeinrichtung 31 enthält zwei sich gegenüberliegende Sprossenklemmer 33 und 34. Die Klemmeinrichtung 32 enthält zwei sich gegenüberliegende Sprossenklemmer 35 und 36. Jeder Sprossenklemmer 33, 34, 35, 36 ist durch eine Klemmrolle gebildet, welche frei drehbar auf einer Achse 37 gelagert ist. Jede Achse 37 ist an einem Gleitstück 38 montiert, welches quer zur Beladerichtung B verschiebbar im Gehäuse 20 gelagert ist. Jedes Gleitstück 38 ist federbelastet und wird von einer Schraubenfeder 39 an die Sprosse 6 angedrückt. Wird die Sprosse 6 aus der Haltevorrichtung 11 herausgezogen, verringert sich der Abstand des Sprossenklemmers 35 zu dem Sprossenklemmer 36 und der Abstand des Sprossenklemmers 33 zu dem Sprossenklemmer 34. Die gekrümmten Umfangsflächen der Sprossenklemmer 33 und 34 bilden einen sich in Beladerichtung B verjüngenden Einführbereich 40. Beim Beladen der Haltevorrichtung 11 wird das untere freie Sprossenende 8 in Beladerichtung B in die Haltevorrichtung 11 eingeführt. Aufgrund des Einführbereichs 40 drückt das Sprossenende 8 die beiden Sprossenklemmer 33 und 34 gegen die Kraft der Schraubenfedern 39 voneinander weg und gelangt so zwischen die Sprossenklemmer 33 und 34. Gleiches geschieht mit den Sprossenklemmer 35 und 36 beim weiteren Einführen des Sprossenendes 8 in die Sprossenendenhalteeinrichtung 30. Die Einführbewegung des Sprossenende 8 in Beladerichtung B wird dadurch begrenzt, dass das Sprossenende 8 an dem Positionieranschlag 26 anschlägt. Das mit der Haltevorrichtung 11 in Eingriff gebrachte Sprossenende 8 befindet sich dann in der in Figur 4 dargestellten Position und wird definiert und sicher in der Sprossenendenhalteeinrichtung 30 fixiert.

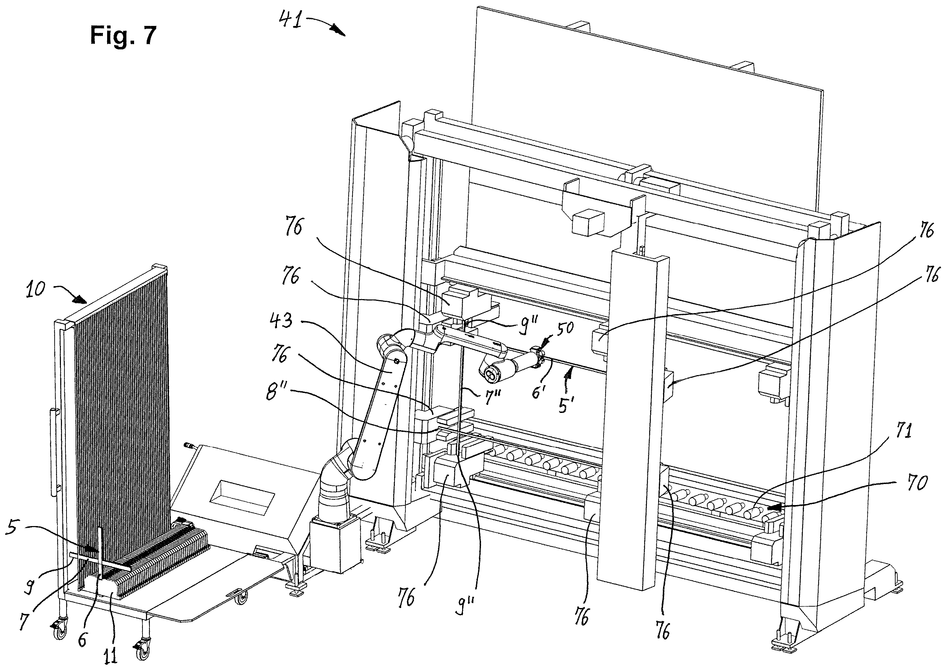

In Figur 7 ist eine automatische Sprossenstation 41 zum Einsetzen von Sprosseneinsätzen 5, 5' dargestellt. Der beladene Transportwagen 10 wird in einer definierten Position an der Sprossenstation 41 abgestellt. Hierzu hat der Transportwagen 10 eine Kupplung 42 zum Ankoppeln an die Sprossenstation 41. Ein der Sprossenstation 41 zugeordneter Roboterarm 43 kann dann die in dem Transportwagen enthaltenen Sprosseneinsätzen 5, 5' entladen und an die Sprossenstation 41 übergeben.

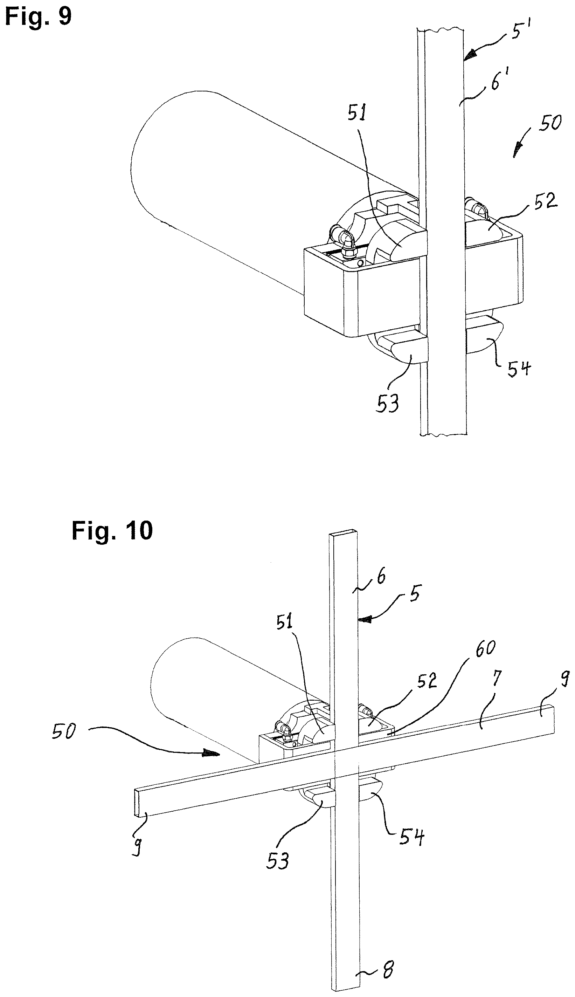

Der Roboterarm 43 weist eine in Figur 8 dargestellte Greifvorrichtung 50 auf. Die Greifvorrichtung 50 weist vier Greifelemente 51, 52, 53, 54 zum Greifen einer Sprosse 6, 6' in deren Mitte auf. Die Greifelemente 51 und 52 bilden ein erstes Greiferpaar 55. Die Greifelemente 53 und 54 bilden ein zweites Greiferpaar 56. Das erste Greifelemente 51 des ersten Greiferpaares 55 ist mit dem ersten Greifelement 53 des zweiten Greiferpaares 56 über einen Verbindungssteg 57 verbunden. Das zweite Greifelemente 52 des ersten Greiferpaares 55 ist mit dem zweiten Greifelement 54 des zweiten Greiferpaares 56 über einen Verbindungssteg 58 verbunden. Der Abstand der Greifelemente 51, 52, 53, 54 ist von einem pneumatischen Antrieb 59 entlang des Doppelpfeils D veränderbar. Aufgrund der Kopplung durch die Verbindungsstege 57, 58 öffnen und schließen sich die beiden Greiferpaare 55 und 56 synchron, wenn eine Sprosse 6' von der Greifvorrichtung 50 gegriffen wird, vgl. Figur 9. Das zweite Greiferpaar 56 weist einen Abstand zum ersten Greiferpaar 55 auf, welcher ermöglicht, dass die Sprosse 6 in ihrer Mitte gegriffen werden kann, wo sich die Quersprosse 7 befindet, vgl. Figur 10. Zwischen den Greiferpaaren 55 und 56 ist eine Abstützung 60 für die Quersprosse 7 angeordnet, welche den Sprosseneinsatz 5 bei der Bewegung des Roboterarms 43 stabilisieren kann. Die Greifvorrichtung 50 ist über einen Anschluss 61 an dem Roboterarm 43 angebracht. Im Übrigen ist der Roboterarm 43 in an sich bekannter Weise ausgebildet und braucht deshalb nicht näher beschrieben zu werden.

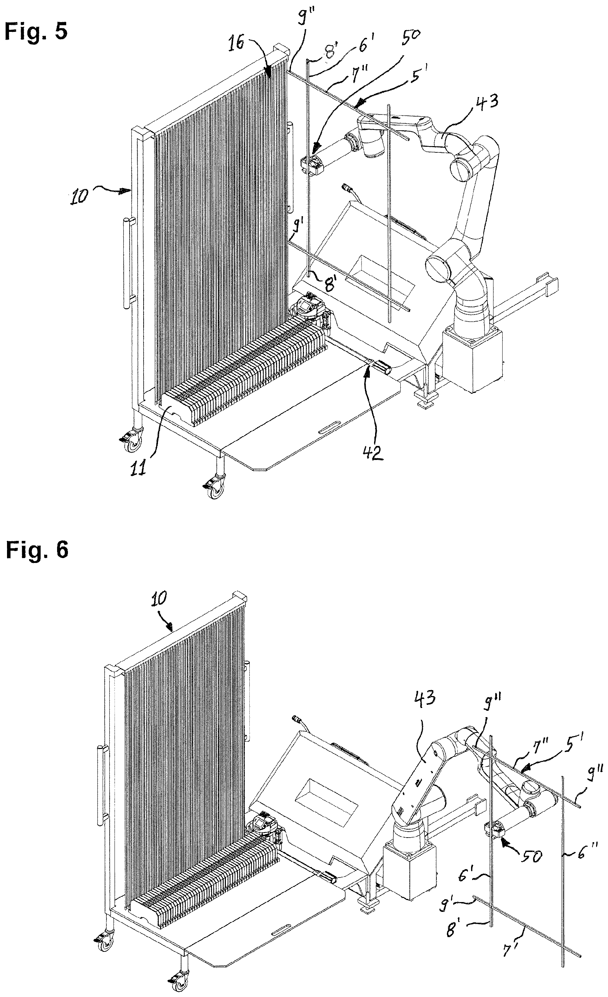

Um den im Transportwagen 10 befindlichen Sprosseneinsatz 5' von der automatischen Sprossenstation 41 in einen Abstandhalter 4 einsetzen zu lassen, bewegt der Roboterarm 43 die Greifvorrichtung 50 zur Mitte der Sprosse 6', deren unteres Ende 8' mit der Haltevorrichtung 11 in Eingriff steht. Die Greifvorrichtung 50 greift die Sprosse 6' wie in Figur 9 dargestellt und hebt den Sprosseneinsatz 5' entgegen der Beladerichtung B an, sodass das untere Ende 8' der Sprosse 6' nach oben aus der Haltevorrichtung 11 herausgezogen wird. Dies ist in Figur 5 dargestellt. Dabei werden die in der Zusatzabstützung 16 befindlichen Sprossenenden 9' und 9" in der Zusatzabstützung 16 nach oben geführt. Anschließend bewegt der Roboterarm 43 die Greifvorrichtung 50 quer zur Beladerichtung B und führt die Sprossenenden 9' und 9" aus der Zusatzabstützung 16 heraus, vgl. Figur 6. Der Sprosseneinsatz 5' ist dabei immer noch hochkant positioniert. Anschließend dreht der Roboterarm 43 die Greifvorrichtung 50 bis die Sprosse 6' horizontal verläuft.

Die Sprossenstation 41, siehe Figur 7, enthält einen oder mehrere einspurige Waagerechtförderer 70, welche von einer Zeile mit mehreren antreibbaren Transportrollen 71 gebildet werden. Derartige Waagerechtförderer 70 sind an sich bekannt. Auf dem Waagerechtförderer 70 steht eine Glastafel 2 mit ihrer Unterkante auf. Die Sprossenstation 41 hat eine Stützwand 74, welche in an sich bekannter Weise zur Vertikalen einen Winkel von 6° bis 8° aufweist, um die sich daran anlehnende Glastafel 2, die auf dem Waagerechtförderer 70 steht, abzustützen und ein unbeabsichtigtes Umfallen nach vorne zu verhindern. Die Glastafel 2 wird in Figur 7 von links in die Sprossenstation 41 gefördert, wobei deren lange Seite horizontal verläuft, vgl. Figur 1. Die Sprossenstation 41 enthält mehrere Bearbeitungsköpfe 76, welche parallel zur Stützwand 74 verschiebbar sind. Die Sprossenstation 41 enthält mehrere mit einer Steuerung gekoppelte Antriebe zum motorischen Verschieben der Bearbeitungsköpfe 76. Vor dem Einsetzen des Sprosseneinsatzes 5' werden die Bearbeitungsköpfe 76 in die Positionen verschoben, welche gemäß der Abmessungen des Sprosseneinsatzes 5' erforderlich sind, um dessen Sprossenenden 8', 8", 9' und 9" zu aufzunehmen. Nun kann der Sprosseneinsatz 5' von dem Roboterarm 43 an die Sprossenstation 41 übergeben werden. Dabei werden die Sprossenenden 8', 8", 9' und 9" von den Bearbeitungsköpfe 76 übernommen und der Sprosseneinsatz 5' parallel zur Stützwand 74 positioniert. Anschließend wird die Greifvorrichtung 50 geöffnet und vom Sprosseneinsatz 5' wegbewegt. Die Greifvorrichtung 50 wird von dem Roboterarm 43 wieder zu dem Transportwagen 10 bewegt, um den nächsten Sprosseneinsatz 5 zu entladen.

Die Bearbeitungsköpfe 76 werden gemeinsam mit dem darin festgehaltenen Sprosseneinsatz 5' in Richtung zur Stützwand 74 bewegt und an die Stützwand 74 und die dort stehende Glastafel 2 angenähert. Dabei wird der parallel zur Glastafel 2 orientierte Sprosseneinsatz 5' quer zur Glasebene in den vom rahmenförmigen Abstandhalter 4 umschlossenen Raum eingeführt und in den Abstandhalter 4 eingesetzt. Nach dem Befestigen aller Sprossenenden des Sprosseneinsatzes 5' werden alle Bearbeitungsköpfe 76 von der Stützwand 74 wegbewegt. Anschließend wird die Glastafel 2 mit dem in den Abstandhalter 4 eingesetzten Sprosseneinsatz 5' von dem Waagrechtförderer 70 aus der Sprossenstation 41 herausgefördert. Damit ist die Sprossenstation 41 wieder frei und kann den nächsten Sprosseneinsatz 5 einsetzen. Die Glastafel 2 wird vom Waagerechtförderer 70 in eine Pressstation (nicht dargestellt) weitergefördert und in an sich bekannter Weise mit der Glastafel 3 zu der Isolierglasscheibe 1 zusammengefügt, indem die Glastafel 3 auf die Schmalseite des Abstandhalters 4 aufgesetzt und der Zwischenraum zwischen den Glastafeln 2 und 3 mit einem von Luft verschiedenen Gas gefüllt wird.

**Bezugszeichenliste**

| | | | |
|---|---|---|---|
| 1 | Isolierglasscheibe | 41 | Sprossenstation |
| 2, 3 | Glastafeln | 42 | Kupplung |
| 4 | Abstandhalter | 43 | Roboterarm |
| 5, 5' | Sprosseneinsätze | 50 | Greifvorrichtung |
| 6, 6', 6" | Sprossen | 51, 52 | Greifelemente |
| 7, 7', 7" | Quersprossen | 53, 54 | Greifelemente |
| 8, 8', 8" | Sprossenenden | 55, 56 | Greiferpaare |
| 9, 9', 9" | Sprossenenden | 57, 58 | Verbindungsstege |
| 10 | Transportwagen | 59 | Greifantrieb |
| 11 | Haltevorrichtung | 60 | Quersprossenabstützung |
| 12 | Gestell | 61 | Anschluss |
| 13 | Rollen | 70 | Waagerechtförderer |
| 14 | Handgriffe | 71 | Transportrollen |
| 15 | Bodenplatte | 74 | Stützwand |
| 16 | Zusatzabstützung | 76 | Bearbeitungskopf |
| 17 | Zusatzabstützung | | |
| 20 | Gehäuse | A | Schnittfläche |
| 21 | Basisseite | B | Beladerichtung |
| 22 | Beladeseite | C | Ausziehrichtung |
| 23, 24 | Seitenwände | D | Greifbewegung |
| 25 | Aussparung | | |
| 26 | Positionieranschlag | | |
| 27 | Reinigungskanal | | |
| 30 | Sprossenendenhalteeinrichtung | | |
| 31, 32 | Klemmeinrichtungen | | |
| 33, 34 | Sprossenklemmer | | |
| 35, 36 | Sprossenklemmer | | |
| 37 | Achse | | |
| 38 | Gleitstück | | |
| 39 | Schraubenfeder | | |
| 40 | Einführbereich | | |

## Patentansprüche

1. Haltevorrichtung (11) zum Halten eines Sprosseneinsatzes (5; 5') für eine Isolierglasscheibe (1) während eines Transportvorgangs, **dadurch gekennzeichnet, dass** die Haltevorrichtung (11) eine Sprossenendenhalteeinrichtung (30) mit einer Beladerichtung (B) aufweist, wobei sich die Beladerichtung (B) entlang einer Sprosse (6; 6') eines in die Haltevorrichtung (11) geladenen Sprosseneinsatzes (5; 5') erstreckt.

2. Haltevorrichtung nach Anspruch 1, welche folgende weitere Merkmale aufweist:
ein Gehäuse (20) mit einer Basisseite (21), einer der Basisseite (21) gegenüberliegenden Beladeseite (22), und zwei Seitenwänden (23, 24), welche sich von der Basisseite (21) bis zu der Beladeseite (22) erstrecken,
wobei die Beladerichtung (B) von der Beladeseite (22) zur Basisseite (21) weist, und wobei das Gehäuse (20) im Bereich der Basisseite (21) eine Aussparung (25) und/oder eine Öffnung für ein mit der Haltevorrichtung (11) in Eingriff gebrachtes Sprossenendes (8; 8') aufweist.

3. Haltevorrichtung nach Anspruch 1 oder 2, in welcher die Sprossenendenhalteeinrichtung (30) wenigstens eine Klemmeinrichtung (31; 32) enthält, um einen mit der Haltevorrichtung (11) in Eingriff gebrachten Sprosseneinsatz (5; 5') im Bereich eines freien Sprossenendes (8; 8') zu klemmen.

4. Haltevorrichtung nach Anspruch 3, in welcher die Klemmeinrichtung (31; 32) einen sich in Beladerichtung (B) verjüngenden Einführbereich (40) aufweist.

5. Haltevorrichtung nach Anspruch 3 oder 4, in welcher die Klemmeinrichtung (31; 32) wenigstens zwei sich gegenüberliegende Sprossenklemmer (33, 34; 35, 36) enthält, wobei wenigstens einer der Sprossenklemmer (33, 34; 35, 36) quer zur Beladerichtung (B) bewegbar ist.

6. Haltevorrichtung nach einem der Ansprüche 3 bis 5, in welcher die Sprossenendenhalteeinrichtung (30) eine erste Klemmeinrichtung (31) und in Beladerichtung (B) dahinter eine zweite Klemmeinrichtung (32) aufweist.

7. Transportwagen (10) zum Transportieren mehrerer Sprosseneinsätze (5, 5') für Isolierglasscheiben (1), **dadurch gekennzeichnet,**
**dass** der Transportwagen (10) eine Beladerichtung (B) und mehrere quer zur Beladerichtung (B) nebeneinander angeordnete Haltevorrichtungen (11) für jeweils einen Sprosseneinsatz (5; 5'), insbesondere nach einem der vorstehenden Ansprüche, aufweist,
wobei jeder der Haltevorrichtungen (11) ein Positionieranschlag (26) zugeordnet ist, welcher die Position eines wenigstens eine Sprosse (6; 6'; 6") aufweisenden Sprosseneinsatzes (5; 5') definiert, nachdem bei einem Beladen ein freies Ende (8; 8') der wenigstens einen Sprosse (6; 6') entlang der Beladerichtung (B) mit dieser Haltevorrichtung (11) in Eingriff gebracht wurde.

8. Transportwagen nach Anspruch 7, in welchem die Beladerichtung (B) vertikal nach unten orientiert ist, sodass ein unteres freies Ende (8; 8') einer vertikal verlaufenden Sprosse (6; 6') mit einer der Haltevorrichtungen (11) in Eingriff gebracht werden kann.

9. Transportwagen nach einem der Ansprüche 7 oder 8, welcher einen Reinigungskanal (27) für den Positionieranschlag (26) aufweist.

10. Transportwagen nach einem der Ansprüche 7 bis 9, welcher wenigstens eine Zusatzabstützung (16; 17) für Sprosseneinsätze (5; 5') aufweist.

11. Transportwagen nach einem der Ansprüche 7 bis 10, welcher wenigstens eine Kupplung (42) zum Ankoppeln des Transportwagens (10) an eine automatische Sprossenstation (41) aufweist.

12. Verfahren zum Transportieren eines Sprosseneinsatzes (5; 5') im Zusammenhang mit der Herstellung einer Isolierglasscheibe (1), mit folgenden Schritten:
• ein wenigstens eine Sprosse (6; 6') aufweisender Sprosseneinsatz (5; 5') wird so positioniert, sodass die wenigstens eine Sprosse (6; 6') vertikal verläuft,
• eine Haltevorrichtung (11), insbesondere nach einem der Ansprüche 1 bis 6, wird mit dem Sprosseneinsatz (5; 5') beladen, indem ein freies Ende (8; 8') der wenigstens einen Sprosse (6; 6') entlang einer Beladerichtung (B) mit der Haltevorrichtung (11) in Eingriff gebracht wird, bis der Sprosseneinsatz (5; 5') an einem der Haltevorrichtung (11) zugeordneten Positionieranschlag (26) anliegt,
• die Haltevorrichtung (11) wird mit dem Sprosseneinsatz (5; 5') zu einer automatischen Sprossenstation (41) transportiert,
• der Sprosseneinsatz (5; 5') wird entladen, indem er der Haltevorrichtung (11) mit einer Greifvorrichtung (50) entgegen der Beladerichtung (B) entnommen und anschließend gedreht wird, bis die wenigstens eine Sprosse (6; 6') horizontal verläuft,
• der Sprosseneinsatz (5; 5') wird von der automatischen Sprossenstation (41) in einen rahmenförmigen Abstandhalter (4) eingesetzt, wobei die wenigstens eine Sprosse (6; 6') horizontal verläuft.

13. Verfahren nach Anspruch 12, welches folgende weitere Schritte aufweist:
• beim Beladen der Haltevorrichtung (11) wird ein unteres freies Ende (8; 8') der wenigstens einen Sprosse (6; 6') von oben in die Haltevorrichtung (11) eingesteckt,
• zum Entladen greift die Greifvorrichtung (50) die mit ihrem unteren freien Ende (8; 8') in der Haltevorrichtung (11) gehaltene Sprosse (6; 6') in deren mittleren Abschnitt und zieht den Sprosseneinsatz (5; 5') nach oben aus der Haltevorrichtung (11) heraus,
• die Greifvorrichtung (50) dreht den Sprosseneinsatz (5; 5') bis die darin gehaltene Sprosse (6; 6') horizontal verläuft.

14. Verfahren nach Anspruch 12 oder 13, in welchem die Greifvorrichtung (50) drehbar an einem beweglichen Roboterarm (43) angebracht ist.

15. Verfahren nach einem der Ansprüche 12 bis 14, in welchem die Greifvorrichtung (50) die in der Haltevorrichtung (11) gehaltene Sprosse (6; 6') mit zwei voneinander beabstandeten Greiferpaaren (55, 56) greift, wobei jedes Greiferpaar (55, 56) zwei Greifelemente (51, 52; 53, 54) enthält, welche beim Greifen der Sprosse (6; 6') einander angenähert werden.
